# EUROPÄISCHE PATENTSCHRIFT

(11) **EP 1 299 927 B1**
(45) Veröffentlichungstag und Bekanntmachung des Hinweises auf die Patenterteilung: **23.08.2006**
(21) Anmeldenummer: 02747277.8
(22) Anmeldetag: 12.04.2002
(51) Int. Cl.: H01R 25/14

(54) **PROFILELEMENT MIT STROMSCHIENE**
PROFILE ELEMENT WITH CURRENT TRACKS
ELEMENT PROFILE A BARRE CONDUCTRICE

(30) Priorität: 25.05.2001 DE 20108792 U
(43) Veröffentlichungstag der Anmeldung: 09.04.2003
(73) Patentinhaber: Möbelwerk A. Trüggelmann GmbH & Co. KG, 33689 Bielefeld (DE)
(72) Erfinder: TRÜGGELMANN, Kai, 33689 Bielefeld (DE)
(74) Vertreter: Wiebusch, Manfred
(86) Internationale Anmeldenummer: PCT/EP2002/004116
(87) Internationale Veröffentlichungsnummer: WO 2002/097932

(56) Entgegenhaltungen:
- AT-B- 314 009
- DE-U- 7 315 749
- DE-U- 9 309 403
- US-A- 4 881 907
- US-A- 5 348 485

## Beschreibung

Die Erfindung betrifft ein Profilelement mit Stromschiene.

Stromschienen werden in weitem Umfang für Elektroinstallationen eingesetzt und haben den Vorteil, daß die elektrische Energie mit Hilfe eines Einspeisers an beliebiger Stelle eingespeist und mit Hilfe von Adaptern, an die elektrische Verbraucher anschließbar sind, an beliebiger Stelle wieder abgegriffen werden kann. Es ist auch bekannt, solche Stromschienen in Profilelemente zu integrieren, die zugleich eine tragende Funktion in Regalen, Möbelteilen und dergleichen haben können.

DE-U-7 315 749 offenbart ein Profilelement gemäß dem Oberbegriff des Anspruchs 1, wobei in jede Profilöffnung ein Stromschienenprofil einsetzbar ist.

Aufgabe der Erfindung ist es, ein Profilelement mit Stromschiene zu schaffen, das vielseitige Anwendungsmöglichkeiten bietet.

Diese Aufgabe wird erfindungsgemäß Anspruch 1 gelöst.

Bei diesem Profilelement kann ein und dasselbe Stromschienenprofil nach Wahl des Benutzers in jede der beiden Profilöffnungen eingesetzt werden, so daß die zugehörigen Einspeiser und/oder Adapter nicht nur in beliebigen Längspositionen, sondern auch an zwei verschiedenen Stellen des Querschnitts des Profilelements angeordnet werden können. Auf diese Weise wird je nach Anwendungszweck eine optimale Anordnung der Adapter ermöglicht. Ebenso ist es selbstverständlich auch möglich, zwei identische Stromschienenprofile in beide Profilöffnungen einzusetzen, so daß eine Zweifachstromschiene gebildet wird.

Gegenstand der Erfindung ist somit auch ein Profilelement, das dadurch gekennzeichnet ist, daß zwei parallele Stromschienen in dasselbe Profilelement integriert sind.

Vorteilhafte Ausgestaltungen der Erfindung ergeben sich aus den Unteransprüchen.

Bei der letztgenannten Ausführungsform können die elektrischen Leiter der beiden Stromschienen zu verschiedenen Stromkreisen gehören. Auf diese Weise wird zum Beispiel bei Beleuchtungsanlagen die Möglichkeit geschaffen, die an die verschiedenen Stromschienen angeschlossenen Leuchten gruppenweise einzuschalten oder zu dimmen.

In Verallgemeinerung des Erfindungsgedankens ist es auch möglich, daß das Profilelement mehr als zwei Profilöffnungen für Stromschienenprofile bildet bzw. mehr als zwei parallele Stromschienen aufnimmt.

Die verschiedenen Stromschienen können auch mit unterschiedlichen Spannungen gespeist werden. So ist es beispielsweise möglich, eine Stromschiene als Netz-Stromschiene für die Versorgung von elektrischen Geräten wie Stereoanlagen, Fernsehern und dergleichen mit der Netzspannung von 230V zu nutzen, während die andere Stromschiene als Niederspannungsstromschiene für Halogenleuchten genutzt wird, die mit einer Gleichspannung von 12 oder 24V betrieben werden. Vorzugsweise sind die beiden oder die mehreren Stromschienen dennoch identisch ausgebildet, wobei hinsichtlich der Isolations- und Berührungsschutzmaßnahmen und hinsichtlich des Vorhandenseins eines Schutzleiters die Anforderungen an eine Netz-Stromschiene erfüllt werden, während die andererseits die Leitungsquerschnitte für die generell höheren Stromstärken bei Niederspannungsanlagen ausgelegt sind.

Die beiden Profilöffnungen bzw. die beiden Stromschienen können so in dem Profilelement angeordnet sein, daß sie von derselben Seite oder von entgegengesetzten Seiten her zugänglich sind. In einer bevorzugten Ausführungsform hat das Profilelement insgesamt einen annähernd elliptischen Querschnitt, und die beiden Profilöffnungen sind einander diametral gegenüberliegend auf der großen Achse der Ellipse angeordnet. Das Profilelement kann beispielsweise durch ein Strangprofil aus Aluminium oder einer Aluminiumlegierung gebildet werden und weist vorzugsweise zusätzlich zu den Profilöffnungen für die Stromschienen eine oder mehrere Installationsnuten auf, beispielsweise diametral gegenüberliegend auf der kleinen Achse der Ellipse, die die Befestigung von Regalböden oder anderen Möbelteilen ermöglichen. So läßt sich das Profilelement beispielsweise als Regalstollen oder als tragendes Element in einer Stollenwand einsetzen, und die elektrischen Versorgungsspanungen für Leuchten und andere Verbraucher können je nach Bedarf an der Vorderseite oder an der Rückseite des Stollens abgegriffen werden.

Wenn eine der für Netzspannung ausgelegten Stromschienen für ein Niederspannungssystem benutzt wird, so lassen sich unter Ausnutzung des Schutzleiters zwei getrennt schaltbare Stromkreise je Stromschiene bilden. Ein zusätzlicher Stromkreis kann bei Niederspannungsanwendungen auch dadurch gebildet werden, daß das aus Metall bestehende Profilelement selbst als elektrischer Leiter genutzt wird.

Bei den lösbar in das Profilelement eingesetzten Stromschienenprofilen handelt es sich vorzugsweise um Extruslonsprofile aus Kunststoff, die in den Profilöffnungen des Profilelements verrastbar sind und in welche die elektrischen Leiter so eingebettet sind, daß sie gegenüber dem Profilelement elektrisch isoliert sind.

Am Rand der Profilöffnungen können Aufnahmen für ein eingeschobenes oder eingeclipstes Abdeckprofil ausgebildet sein. Mit Hilfe des Abdeckprofils kann die Profilöffnung verblendet werden, die nicht für die Aufnahme eines Stromschienenprofils genutzt wird. Ebenso ist es möglich, das Stromschienenprofil, das vorzugsweise als Endlosmaterial bereitgestellt wird, nur in bestimmten Längsabschnitten des Profilelements einzusetzen. Die übrigen Längsabschnitte können mit dem Abdeckprofil verblendet werden. Wahlweise ist es auch möglich, das Abdeckprofil über dem Stromschienenprofil anzubringen, so daß Teile des Stromschienenprofils, die nur zur elektrischen Verbindung angrenzender, für Adapter zugänglicher Abschnitte dienen, mit Hilfe des Abdeckprofils verkleidet werden können.

Im folgenden werden Ausführungsbeispiele der Erfindung anhand der Zeichnung näher erläutert.

Es zeigen:
- Fig. 1: einen Schnitt durch ein erfindungsgemäßes Profilelement;
- Fig. 2: einen Schnitt durch das Profilelement nach Figur 1 in einer anderen Anwendungskonfiguration; und
- Fig. 3: eine perspektivische Ansicht einer Regalwand, in der Profilelemente der in Figuren 1 und 2 gezeigten Art als Regalstollen eingesetzt werden.

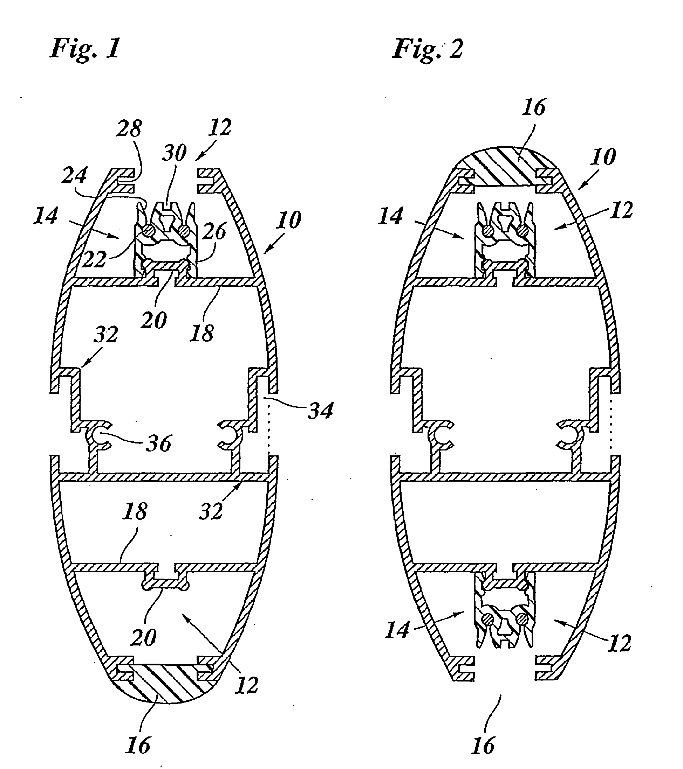

Das in Figur 1 im Querschnitt gezeigte Profilelement 10 wird durch ein Strangprofil, beispielsweise aus Aluminium gebildet und hat einen annähernd elliptischen Außenquerschnitt. Auf der großen Achse der Ellipse sind einander diametral gegenüberliegend und spiegelbildlich zueinander zwei formidentische Profilöffnungen 12 ausgebildet, in denen ein elektrisch isolierendes Stromschienenprofil 14 verrastbar ist. In dem in Figur 1 gezeigten Zustand ist nur in die obere Profilöffnung 12 ein Stromschienenprofil 14 eingesetzt, während die untere Profilöffnung durch ein Abdeckprofil 16 verschlossen ist. Figur 2 zeigt dagegen eine Konfiguration, bei der Stromschienenprofile 14 in beide Profilöffnungen 12 eingesetzt sind. Die Schnittebene liegt hier in einem Längsabschnitt des Profilelements 10, in dem das untere Stromschienenprofil 14 durch die dort nicht verschlossene Profilöffnung zugänglich ist, während das obere Stromschienenprofil 14 verdeckt hinter dem Abdeckprofil 16 liegt.

Der Grund jeder Profilöffnung 12 wird durch einen Steg 18 des Profilelements begrenzt, der eine konvex in die Profilöffnung 12 hineinragende Rastkontur 20 für das Stromschienenprofil 14 bildet.

Das Stromschienenprofil 14 ist in an sich bekannter Weise als Kunststoff-Extrusionsprofil ausgebildet, in das zwei elektrisch voneinander isolierte Leiter 22 so eingebettet sind, daß sie jeweils durch einen Schlitz 24 zugänglich sind. Das Stromschienenprofil 14 ist mit zwei Raststegen 26 so auf die Rastkontur 20 aufgeclipst, daß die Schlitze 24 zur offenen Seite der Profilöffnung 12 weisen.

In den Wänden des Profilelements 10, die die Profilöffnung 12 begrenzen, sind zwei einander gegenüberliegende Nuten 28 ausgebildet, die zur Fixierung des Abdeckprofils 16 dienen. Zugleich können die Nuten 28 zur Fixierung eines nicht gezeigten Adapters dienen, der mit Kontaktklingen in die Schlitze 24 des Stromschienenprofils 14 eingreift und den elektrischen Strom von den Leitern 22 abgreift. Adapter, die sich in dieser Weise an einer Stromschiene fixieren lassen, sind als solche bekannt und werden deshalb nicht näher beschrieben. Das Profilelement 10 und das Stromschienenprofil 14 sind vorzugsweise so gestaltet, daß sie mit handelsüblichen Adaptern kompatibel sind.

Im gezeigten Beispiel weist das Stromschienenprofil 14 lediglich zwei Leiter 22 für die Verwendung als Niederspannungs-Stromschiene auf. Hinsichtlich Isolation und Berührungsschutz erfüllt das Stromschienenprofil 14 und seine Anordnung in dem Profilelement 10 jedoch auch die Anforderungen an eine Netz-Stromschiene für eine Spannung von beispielsweise 230V. In diesem Fall kann in eine Nut 30 des Stromschienenprofils ein Schutzleiter eingesetzt werden, sofern nicht das gesamte Profilelement 10 als Schutzleiter benutzt wird.

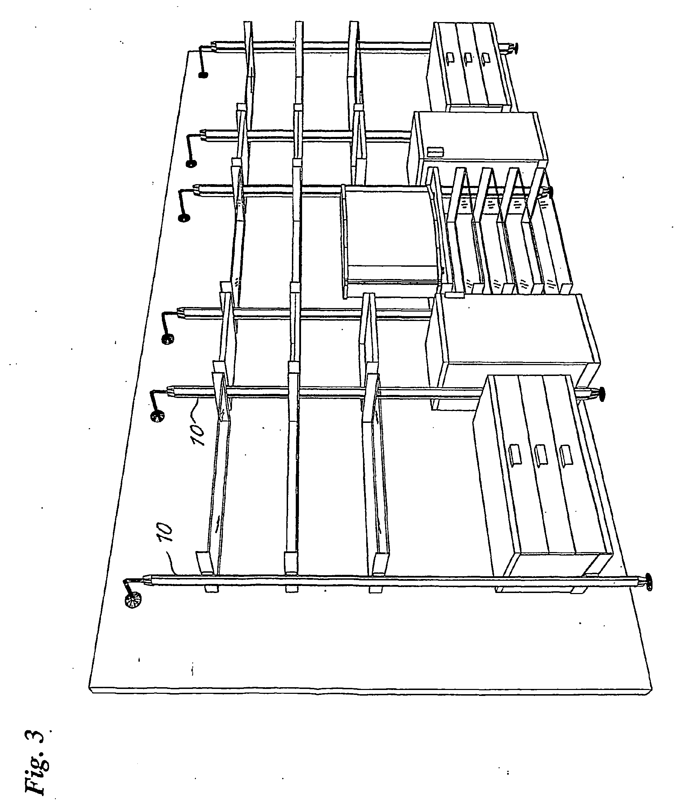

Auf der kleinen Achse des elliptischen Querschnitts des Profilelements 10 sind einander diametral gegenüberliegende Befestigungsprofile 32 ausgebildet, deren Querschnitte spiegelbildlich zueinander in Bezug auf die Mittelachse des Profilelements 10 sind und die jeweils eine hinterschnittene Befestigungsnut 34 für Regalböden oder andere Funktionsteile sowie einen Schraubenkanal 36 bilden. Mit ihren Befestigungsnuten 34 können die Profilelemente 10 daher in bekannter Weise als Regalstollen für eine Regalwand eingesetzt werden, wie in Figur 3 gezeigt ist. Die Regalböden oder sonstige Möbelelemente können in an sich bekannter Weise mit Klemmbeschlägen oder mit Schrauben in den Befestigungsnuten 34 befestigt werden. Die Schraubenkanäle 36 dienen beispielsweise zur Befestigung von Endkappen an den Enden der Profilelemente 10.

## Patentansprüche

1. Profilelement mit Stromschiene, wobei das Profilelement (10) zwei Profilöffnungen (12) mit formidentischem Innenquerschnitt bildet, **dadurch gekennzeichnet, daß** in jede Profilöffnung ein Stromschienenprofil (14) lösbar einsetzbar ist.

2. Profilelement nach Anspruch 1, **dadurch gekennzeichnet, daß** zwei zueinander parallele Stromschienenprofile (14) in ein gemeinsames Profilelement (10) integriert sind.

3. Profilelement nach Anspruch 2, **dadurch gekennzeichnet, daß** die Stromschienenprofile (14) identische Querschnitte haben.

4. Profilelement nach einem der vorstehenden Ansprüche, **dadurch gekennzeichnet, daß** das Stromschienenprofil (14) in der Profilöffnung (12) verrastbar ist.

5. Profilelement nach Anspruch 4, **dadurch gekennzeichnet, daß** das Profilelement (10) ein Hohlprofil ist, das im Inneren zwei Stege (18) aufweist, die jeweils den Grund einer der Profilöffnungen (12) bilden und auf denen jeweils eine Rastkontur (20) für das Stromschienenprofil (14) ausgebildet ist.

6. Profilelement nach einem der vorstehenden Ansprüche, **dadurch gekennzeichnet, daß** das Stromschienenprofil (14) ein Strangprofil aus Kunststoff ist, in das mindestens zwei Leiter (22) eingebettet sind, die über Schlitze (24) des Stromschienenprofils zugänglich sind.

7. Profilelement nach Anspruch 6, **dadurch gekennzeichnet, daß** die Schlitze (24) zur offenen Seite der Profilöffnung (12) des Profilelements (10) weisen.

8. Profilelement nach einem der vorstehenden Ansprüche, **dadurch gekennzeichnet, daß** das Profilelement (10) an den Rändern der Profilöffnungen (12) Eingriffskonturen (28) für einen Stromschienenadapter und/oder ein Abdeckprofil (12) bildet.

9. Profilelement nach einem der vorstehenden Ansprüche, **dadurch gekennzeichnet, daß** die Stromschienenprofile (14) und/oder die zugehörigen Profilöffnungen (12) einander diametral gegenüberliegend in dem Profilelement (10) angeordnet sind.

10. Profilelement nach Anspruch 9, **dadurch gekennzeichnet, daß** das Profilelement (10) ein Regalstollen ist, der einander diametral gegenüberliegende, rechtwinklig zu den Profilöffnungen (12) für die Stromschienenprofile (14) angeordnete Befestigungseinrichtungen (34) für Regalelemente aufweist.

## Claims

1. Profile member including a current rail, wherein the profile member (10) forms two profile openings (12) having internal cross-sections with identical shapes, **characterized in that** a current rail profile (14) is detachably insertable into each profile opening.

2. Profile member according to claim 1, **characterized in that** two current rail profiles (14) arranged in parallel to one another are integrated in a common profile member (10).

3. Profile member according to claim 2, **characterized in that** the current rail profiles (14) have identical cross-sections.

4. Profile member according to any of the preceding claims, **characterized in that** the current rail profile (14) is adapted to be snap-fastened in the profile opening (12).

5. Profile member according to claim 4, **characterized in that** the profile member (10) is a hollow profile which is internally provided with two webs (18) each of which defines the base of one of the profile openings (12) and forms a snap contour (20) for the current rail profile (14).

6. Profile member according to any of the preceding claims, **characterized in that** the current rail profile (14) is an extruded profile of synthetic resin, in which at least two conductors (22) are embedded which are accessible via slots (24) of the current rail profile.

7. Profile member according to claim 6, **characterized in that** the slots (24) are directed towards the open side of the profile opening (12) of the profile member (10).

8. Profile member according to any of the preceding claims, **characterized in that** the profile member (10) forms, at the edges of the profile openings (12), engaging contours (28) for a current rail adapter and/or a cover profile (16).

9. Profile member according to any of the preceding claims, **characterized in that** the current rail profiles (14) and/or the corresponding profile openings (12) are arranged diametrically opposite to one another in the profile member (10).

10. Profile member according to claim 9, **characterized in that** the profile member (10) is an upright of a rack and has fastening means (34) for rack components, said fastening means being arranged diametrically opposite to one another at right angles to the profile openings (12) for the current rail profiles (14).

## Revendications

1. Elément profilé avec rail électrique, l'élément profilé (10) formant deux ouvertures de profilé (12) avec section transversale intérieure de forme identique, **caractérisé en ce que** dans chaque ouverture de profilé peut être inséré, de manière amovible, un profilé de rail électrique (14).

2. Elément profilé selon la revendication 1, **caractérisé en ce que** deux profilés de rail électrique (14) parallèles l'un à l'autre sont intégrés dans un élément profilé (10) commun.

3. Elément profilé selon la revendication 2, **caractérisé en ce que** les profilés de rail électrique (14) présentent des sections transversales identiques.

4. Elément profilé selon l'une des revendications précédentes, **caractérisé en ce que** le profilé de rail électrique (14) peut s'accrocher dans l'ouverture de profilé (12).

5. Elément profilé selon la revendication 4, **caractérisé en ce que** l'élément profilé (10) est un profilé creux qui présente à l'intérieur deux cloisons (18) qui forment chacune le fond de l'une des ouvertures de profilé (12) et sur chacune desquelles est réalisé un contour d'encliquetage (20) pour le profilé de rail électrique (14).

6. Elément profilé selon l'une des revendications précédentes, **caractérisé en ce que** le profilé de rail électrique (14) est un profilé extrudé en matière plastique dans lequel sont noyés au moins deux conducteurs (22) qui sont accessibles par des fentes (24) du profilé de rail électrique.

7. Elément profilé selon la revendication 6, **caractérisé en ce que** les fentes (24) sont dirigées vers le côté ouvert de l'ouverture de profilé (12) de l'élément profilé (10).

8. Elément profilé selon l'une des revendications précédentes, **caractérisé en ce que** l'élément profilé (10) forme, sur les bords des ouvertures de profilé (12), des contours d'engagement (28) pour un adaptateur de rail électrique et/ou un profilé de recouvrement (12).

9. Elément profilé selon l'une des revendications précédentes, **caractérisé en ce que** les profilés de rail électrique (14) et/ou les ouvertures de profilé (12) correspondantes sont disposées diamétralement opposés les uns aux autres dans l'élément profilé (10).

10. Elément profilé selon la revendication 9, **caractérisé en ce que** l'élément profilé (10) est un montant d'étagère qui comporte des dispositifs de fixation (34) d'éléments d'étagère, diamétralement opposés les uns aux autres, disposés à angle droit par rapport aux ouvertures de profilé (12) pour les profilés de rail électrique (14).
